# EUROPEAN PATENT SPECIFICATION

(11) **EP 1 335 651 B1**
(45) Date of publication and mention of the grant of the patent: **16.02.2005**
(21) Application number: 01997228.0
(22) Date of filing: 21.11.2001
(51) Int. Cl.: A23L 1/18, A23L 1/164, A23P 1/12

(54) **METHOD OF PRODUCING SNACK AND BREAKFAST CEREAL PRODUCTS AND A PRODUCT PRODUCED ACCORDING TO THIS METHOD**
VERFAHREN ZUR HERSTELLUNG VON SNACK- UND FRÜHSTÜCKSZEREALIEN-PRODUKTEN UND EIN GEMÄSS DIESEM VERFAHREN HERGESTELLTES PRODUKT
PROCEDE DE PRODUCTION D'EN-CAS ET DE CEREALES POUR PETIT DEJEUNER ET PRODUIT OBTENU SELON LEDIT PROCEDE

(30) Priority: 23.11.2000 DK 200001766; 30.07.2001 DK 200101157
(43) Date of publication of application: 20.08.2003
(73) Proprietor: Knudsen, Ole, 8220 Brabrand (DK)
(72) Inventor: Knudsen, Ole, 8220 Brabrand (DK)
(74) Representative: Tellefsen, Jens J.
(86) International application number: PCT/DK2001/000771
(87) International publication number: WO 2002/041708

(56) References cited:
- US-A- 4 259 359
- US-A- 5 128 166
- US-A- 5 238 697
- US-A- 6 045 851
- US-A- 6 054 166
- FREDERICK J. FRANCIS: 'Encyclopedia of food science and technology second edition', October 1999 XP002909961 Extruded snack and direct expansion, volume 4, Page 2159, 2162 and 2163

## Description

The present invention relates to a method of producing expanded snack and breakfast cereal products which are made from durum wheat and a product produced according to this method.

The invention concerns a method of producing expanded snack and breakfast cereal products wherein the primary ingredient in the product is durum wheat, for instance in the shape of sprouted durum wheat which constitutes 50-100% of the weight of the flour ingredients. The method comprises mixing of the ingredients which thereafter are extruded, whereby an expansion is caused. The extruded product is cut into appropriate pieces which, subsequently, are dried, thus obtaining a product with a pleasant basis taste and a very crispy consistence.

The method is particularly suited for the production of crisp, salty snacks from durum wheat with a very low fat content.

### Background of the invention

There are many examples of methods of producing expanded snacks and breakfast cereal products based on roughly all other types of grain and flour. The simplest method of producing expanded snacks consists of heating a liquid containing dough under high pressure in an extruder. As the product leaves the extruder, a large amount of the water content evaporates immediately, which results in an expanded product. Maintaining the expanded structure is, generally, obtained by using a dough with a high level of starch.

Many examples of low fat snack products are known, but there are no low fat products based on natural ingredients that can compete with snacks with a high content of fat when it comes to taste. The most common low fat snacks are manufactured from pellets, i.e. an extruded halfproduct which is to be expanded in a microwave oven or hot air oven by the producer. This process is both inconvenient and expensive compared to producing directly extruded products which expand immediately after the extruder.

Wheat has been seen described as less suitable for extrusion since wheat does not expand as well as other types of grain (Matz, Snack Food Production, 1984). Wheat with a high protein content has earlier been considered unsuitable for expanded products because the gluten of the wheat causes the expanded product to retract to a hard, compact structure.

In the literature it is stated that wheat is best extruded at middle to low temperatures (Mian Riaz, Technical Bulletin, 1997) (that is about 70°C - about 110°C, the editor).

Durum wheat is distinctive from all other types of hard wheat in that the protein of durum wheat has different genetic characteristics. This fact is used to detect adulteration of pasta products which are declared to consist of 100% durum wheat. The differences result in that the endosperm of dry durum wheat is much harder than that of other hard types of wheat.

The sprouting of durum wheat is often a big problem for durum wheat growers because the sprouting makes durum wheat unsuitable for the making of pasta, which is the primary use of durum wheat. Furthermore, sprouted durum wheat is impaired in relation to bread making.

No methods of using sprouted durum wheat have been described.

Methods for producing extruded pasta snacks, which are expanded by deep frying after the extrusion, have been described - patent no. US 5238697 and US 5128166. In the described methods products with about 10% fat are achieved.

US 4259359 concerns the manufacturing of expanded products with a high content of protein from whole grain wheat with a high protein content. In order to maintain the expansion, acid, such as milk acid, is added to the dough. In the patent hard wheat types are mentioned, but not durum wheat. The achieved products have a density of between about 16 g/100 ml and 22 g/100 ml.

In a method described by Breen et al. in Cereal Chemistry, July-August 1977, p. 728-736, a number of tests are carried out under laboratory circumstances with different basic mass mixtures, including durum based mixtures, temperature intervals and extrusion tools. Besides conclusions regarding the consistence of the ground mass in relation to the speed of production, it was found that the optimal temperature for extrusion in order to achieve the best product qualities was 99°C, i.e. just below the boiling temperature of water with the subsequent development of steam.

The nearest prior art for manufacturing snacks based on durum wheat is described in US 6045851 which concerns the manufacturing of a pasta product which is expandable. The process consists of mixing of ingredients, extrusion boiling at 90-110°C, where the product when leaving the extruder contains 30-40 weight% water, followed by cutting and drying in two steps exposed to a powerful stirring of air. The resulting product can, subsequently, be expanded in hot air or in a micro wave oven in a way similar to that of popcorn.

### Description of the invention

It is the object of the present invention to provide a method by which expanded snack and breakfast cereal products can be produced with flour from durum wheat, durum semolina, durum granular and/or other products of Triticum Durum in a simple and quick process that eliminates and, surprisingly, overcomes the disadvantages of prior art. Furthermore, the invention relates to a product produced according to the new method, which offers an unusually good crisp sensation in the mouth compared to other extruded products. Surprisingly, the products produced according to the new method constitute an unusually good base for tasty snacks with a very low fat content.

This is achieved with a method which is distinctive in that a basic mass is mixed in which durum wheat flour of all types constitutes 50-100 weight% of the flour mixture, the basic mass is extruded, that during the extrusion process a pressure is built up in the basic mass, that the basic mass is heated to a temperature between 100°C and 160°C, preferably between 110°C and 150°C, that the desired size and shape of the product is conveyed to the basic mass during or immediately after exiting the extruder and that the individual products are dried to a desired moisture level.

In the present invention weight% is to be understood as weight% of the dried mass, except for water where weight% indicates weight% of the total mass.

Flour mixture is in the present connection to be understood as all cereals, i.e. sprouted and unsprouted flour ingredients.

The product produced according to this process is distinctive in that the product contains durum wheat and has a density between 30 g/100 ml and 8 g/100 ml and a moisture level less than 7 weight%, preferably less than 5 weight%.

Surprisingly, it has been found that durum wheat mixed with a small amount of water (0-20% of the total weight of water and flour) and processed in an extruder under high pressure, i.e. a pressure of 40-95 bar in the extrusion tool, at temperatures of 100-160°C without adding acid, which is the case in the process known from US 4259359, expands and maintains its expansion after leaving the extruder. The products are given their desired size and shape immediately when exiting the extrusion tool. This can be done in various ways, for example by cutting with one or several rotating or reciprocating knives, by a matrix or by forming the extrusion tool in such a manner that product pieces are formed during the extrusion.

By extruding a product is obtained which is easy to dry and has a good taste and a very fine crispy texture. The drying may as an example take place in a drying oven at temperature/time combinations from 100°C for 10 minutes to 200°C for 20 minutes. A possible theory for the ability of the durum flour to maintain the expanded form probably is due to the hard characteristics of the protein in the dry form, since, in fact, a large amount of the water leaves the dough during the expansion.

The durum wheat may be durum semolina, durum flour, durum granular or other products of Triticum Durum.

Sprouted durum wheat can also be used according to the method. The wheat flour, when used in the basic mass, can be manufactured from sprouted as well as unsprouted wheat.

The invention represents a substantially simplified process of manufacturing consisting of mixing, extruding, cutting and drying after which the finished product is ready to be consumed and is not to be expanded subsequently. Flavor and/or color adding ingredients can be added at different steps during the process using known techniques.

In a preferred embodiment of the method, the basic mass consists of durum wheat flour, durum semolina, durum granular and/or other products of Triticum Durum as primary ingredient, including products manufactured of sprouted durum wheat; the basic mass is mixed in a mixer, adding vegetable starch, for example corn starch, potato starch, rice starch, wheat starch, corn flour, rice flour, rye flour, potato flour, wheat flour, modified starch or other hydrocolloids so that this constitutes 0-50 weight% of the flour mixture; 0-10 weight% vegetable oil and, if desired, additives, flavor and color additives, for example milk products, salt, mineral salt, herbal salt, smoke salt, sugar, honey, flavor enhancers, pH regulating means, vitamins, minerals, aroma; the basic mass, including optional additives, is conveyed to an extruder where between 0 and 5 weight% oil can be added directly in the extrusion tool;
- 0-20 weight% water of the total mass is added either in the mixer or in-line in the extruder;
- temperature and pressure of the basic mass are measured at the extrusion die;
- the basic mass is given its final shape during or immediately after its exit from the extruder;
- the products are given their shape by cutting an extruded string into the desired pieces with a shaping tool, for example a knife, matrix or roller;
- the products that have been cut off are dried directly after exiting the extruder or shaping tool and
- the products are dried at a temperature of between 100°C and 200°C for between 10 and 20 minutes.

By varying the content of durum wheat, the water content, the oil content, the pressure and temperature and/or the number of revolutions of the extrusion screws, the expansion can be varied so that durum wheat based snacks with a density of 7 g/100 ml to 25 g/100 ml, corresponding to an expansion of approximately 2 to approximately 8 times, can be produced.

Thus, the products with a high density, which have been dried/baked at high temperature/time combinations, obtain a compact texture and a crunchy crisp sensation in the mouth, which greatly resembles that of pork rind, while the products with a low density can be dried at lower temperature/time combinations and resemble the common expanded snack and breakfast cereal products with a particularly crunchy and "crispy" texture. The products can contain as little as 0 weight% added fat.

The term "chips" used in this application is intended to describe a crisp snack product with a flat round or oval shape resembling potato chips, traditionally produced by deep frying thin slices of potato.

The qualities of the product can, furthermore, be influenced by adding other sources of starch (such as corn starch, rice starch, potato starch, wheat starch, rye flour, potato flour, wheat flour, corn flour, modified starch or other hydrocolliods).
The starch can compensate for variations in the quality and grinding of the durum wheat.
Apart from semolina, flour, starch and water, the ingredients may be vegetable oil, milk products, salt, possibly mineral salt, herbal or smoke salt, sugar, honey, flavor enhancers, pH regulating means, vitamins, minerals, and generally flavoring or coloring additives. The ingredients can be mixed with the durum wheat flour prior to the extrusion or can be added in-line in the extruder. By using known techniques, flavoring or coloring ingredients can be added before, during or after the extrusion and before or after drying, see, moreover, a preferred embodiment stated in example 10.

In a preferred embodiment flavor additives are added after the extrusion or after drying by coating the individual products with a surface coating of atomized vegetable oil or a starch or polymer solution and, subsequently, leading them through an atomized fog of spice mixtures or, alternatively, conveying the surface coated products to a cylinder where spices are added continuously.

If the production of chips resembling products is desired, a roller device is arranged immediately after the exit of the products from the extruder, thus providing the products with an usually oval or oblong shape with a preferred thickness of between 1 mm and 10 mm. The rolled products are subsequently dried.

In order to achieve an optimal extrusion process and an optimal expansion, it is especially preferred that the temperature of the basic mass, measured at the extruder die, is between 110°C and 160°C, more preferred between 125°C and 155°C and in particular between 125°C and 145°C. At the quoted temperature intervals a flexible extrusion of the basic mass is achieved, which, after exiting the extruder die, achieves an optimal and controlled expansion that provides the products with a uniform and desired structure and shape.

In certain cases, for instance where it is desired to add ingredients which should be heated as shortly as possible or relatively expensive ingredients, such as aroma additives which can evaporate or for another reason which dictates that the basic mass should not be mixed with these ingredients, these can advantageously be added in-line in the extruder, i.e. added to the basic mass immediately before extrusion.

In a further preferred embodiment a pressure is built up in the basic mass of between 25 bar and 110 bar, preferably between 40 bar and 95 bar and most preferred between 49 bar and 95 bar.

By using the method as described above very light end products are achieved, viz. products with a density between 30 g/100 ml and 7 g/100 ml while, simultaneously, keeping the moisture level below 7 weight%, and preferably below 5 weight%. Furthermore, since the method does not require any adding of oil or other fat containing ingredients in all cases, the fat content of the end product can be kept under 10 weight% and in certain combinations the end product has 0 weight% added fat, i.e. no added fat, but only the natural fat content of the ingredients.

The invention thus provides a method of producing expanded snack or breakfast cereal products with a very light and crispy structure where the content of fat is much smaller than what is usually common.

### Description of the preferred embodiments

In the preferred embodiment of the invention 0-15 weight% water is added to a total water content of 10-27 weight%, which together with a temperature in the extruder of 100-160°C results in a forceful expansion. Prior to the extrusion 0-10 weight% oil is added to the flour mixture. Due to the low addition of water, drying can take place in one step at temperature/time combinations from 100°C for 10 minutes to 200°C for 20 minutes.

In another preferred embodiment 10-15 weight% water and 0-5 weight% oil are added and the mixture is, subsequently, extruded at temperatures between 100°C and 130°C (measured at the die) and the extruded product is, subsequently, dried at temperatures between 160°C and 200°C for 15-20 minutes. This product has a density of 200-250 g/l and has a texture which greatly resembles that of pork rind.

In a third especially preferred embodiment 0-10 weight% water and 0-10 weight% oil is added and the mixture is extruded at temperatures between 125°C and 155°C (measured at the die) and the extruded product is, subsequently, dried at temperatures between 100°C and 140°C for 10-20 minutes. This product has a density of 80-110 g/l and has a particularly crunchy and crispy texture.

In a fourth especially preferred embodiment the flour mixture consists of 85-95 weight% durum semolina and 5-15 weight% corn starch. 0-7 weight% water is added and 0-10 weight% oil and the mixture is extruded at temperatures between 135°C and 155°C, subsequently the extruded product is dried at temperatures between 100°C and 140°C for 10 to 20 minutes.
This product has a density of 70-100 g/l and a crunchy and crispy texture which is a little lighter than the above-mentioned embodiment.

In a fifth especially preferred embodiment the flour mixture consists of 85-95 weight% durum semolina and 5-15 weight% corn starch. 8-15 weight% water is added and 0-10 weight% oil and the mixture is extruded at temperatures between 125°C and 145°C (measured at the die), the extruded product is, subsequently, dried at temperatures between 140°C and 180°C for 10 to 20 minutes.
This product has a density of 100-200 g/l and a scruncingly crunchy and crispy texture.

In a sixth especially preferred embodiment the product from the above mentioned embodiments is rolled between two suitable rollers arranged immediately after the extruder to a thickness of 1-5 mm, thus achieving a chips resembling product.

In the following the invention will be explained in more detail with reference to the attached schematic drawing, where fig. 1 shows a schematic drawing of an example of an apparatus for use when practicing the method according to the invention.

The apparatus (1) consists of a mixer (2) in which the basic mass is mixed. The mixer can be of the type used for producing flour mixtures for bakeries. The basic mass is conveyed to the extruder (3) where other ingredients can be added in-line via one or more valves (4). The extruder can for example be of the doublescrewed Werner & Pleider Continua 37 type with a capacity of 20-50 kg/h.

A device (6) is arranged immediately after the extrusion tool (5) in order to provide the product with its shape. The device (6) can for example be a rotating or reciprocating knife device, a matrix or a similarly suited device for providing the hot product with its shape.

After the device (6), which in this example is a rotating knife, the product pieces which have been cut off are rolled in a roller thus providing the products with a flat oval chips like shape. The roller can, for instance, be a corn roller of the brand Agrima type 150 SH30, an Agrima type 160 SM or the like.

After the cutting or rolling, the products are conveyed to a drying oven (8). The oven is, typically, built with a conveyer belt (9) at the bottom and an arrangement (10) for rotating the hot drying air. After the drying process, which, typically, lasts 10 to 20 minutes at between 100°C and 200°C, the products are conveyed to a first cylinder (11) where oil (13) is applied, subsequently the oil treated products pass a device for adding seasoning, for example in the shape of a second cylinder, where seasoning is added continuously, or the oil treated products pass through a cloud of aroma/seasoning which can have been created by ultra sound.

After this the products are ready for packing and consumption.

### Examples

It applies to all examples that the same products can be produced with sprouted durum wheat with an adjustment of the temperature towards lower degrees. All quoted percentages are weight% of the dry mass unless something else is stated. In several of the examples a varying dosage of oil has been used. A higher dosage results in a higher density and vice versa. The optimal oil content is, in most examples, approximately 2 weight%. The oil reduces the pressure in the extruder and counteracts sintering.

### Example 1

The product consists of
Durum Semolina Course, 3.5% vegetable oil (75% sun flower oil, 13% palm oil and 12% coconut oil - any other vegetable oil is useable, but either this oil or rape oil has been used in all examples with the exception of example 8) and 0-2.6% salt, added 12% water at the extrusion (in percentage of all ingredients). The adding of salt is varied depending on whether the product is to be spiced subsequently. The total content of water is 20-26 weight% of the total mass.

In this embodiment a doublescrewed Werner & Pleider Continua 37 extruder with a capacity of 20-50 kg/h. has been used. This extruder consists of 5 houses, each 160 mm, and an end flange of 50 mm. The heating of the extruder takes place in 4 of the 5 houses where electrically heated oil circulates in the cap.
Cap temperature during the entire test: House no. 2,3,4 and no. 5 were, respectively, 110°C and 105°C.
The extruder is mounted with 2 screw elements, where the screw configuration can be designed optimally for each mixture.
In this embodiment the following screw configuration is used:
30s40, 90s60, 30s40, 40k, 250s40, 40k, 230s40, 40k(1), 80s40, in total 830 mm.
The die plate is mounted in the end flange and a die plate with 2 slits of a length of 12 mm and a width of 1.5 mm has been used. Other die plates can be used in order to vary the shape of the product.
When the hot product passes through the die it is cut into pieces of an appropriate length by a rotating knife with 2 blades. The speed of the knife is variable so that the size of the cut pieces can be varied.

Durum wheat semolina mixed with salt in a dry mixer is added through a twin screw snail in house no. 1, water is added in house no. 1 and oil is added in house no. 3. Alternatively, the oil can, for instance, be added in the dry mixer.

For drying and subsequent treatment, a belt dryer with a belt width of 850 mm and a cabin length of 2500 mm is used. The product is led through the drying cabin on a mesh belt and is dried by hot air. The belt dryer has the possibility of variable heat output and staying time, as the air temperature is controlled by thermostat up to 200°C. The belt has variable speed.
In this embodiment the product is dried/baked at 160°C to 180°C for 20 minutes.

The product has a density of about 250 g/l, a very crisp and crunchy texture like pork rind and is a tasty salty snack with less that 5 weight% fat. The product can, subsequently, be seasoned as described in example 10.

### Example 1A

Product produced as in example 1, but added corn starch in 10 weight% of all dry ingredients.
In this embodiment 8-13 weight% water has been added in the extruder. The total content of water is 18-26 weight% of the total mass.
The products have been dried at 140°C-160°C for 20 minutes.
The product has a density of 140-200 g/l and resembles airy crispy pork rind.
The product contains less than 5 weight% fat and can subsequently be seasoned as described in example 10.

### Example 2

Product produced as in example 1, but only added 5-6% water (in percentage of the total ingredients). The total content of water is 16-20 weight% of the total mass.
Produced as in example 1, but at a temperature of 140°C - 160°C in the 4 first houses and a material temperature of 135°C - 155°C.
The product is very expanded and dries very quickly, even without being conveyed through the drying oven.
Temperature/time in the drying oven in the present embodiment is 120°C-130°C for 20 minutes, after which the end products have a water content of about 4 weight%.
The product has a density of 80-110 g/l and a very crispy and airy texture and is a tasty snack with less than 5 weight% fat. The product can subsequently be seasoned as described in example 10.

### Example 2A

Product produced as in example 2, but with a changed screw configuration - the second to last element 40k(1) has been replaced by 40k.
40k(1) is a lencs element which means that the screws drive the product backwards instead of forwards.
The effect of the lencs element is that the staying time in the preceding zones is prolonged which promotes heating and kneading, and increases the shear effect.
Replacing 40k(l) with 40k resulted in a higher measured pressure in the extruder, but the product was unchanged in relation to that of example 2. The remaining examples have all been executed with a screw configuration as described in example 1.
Example 2 shows that other screw configurations can be used with good results.

### Example 3

Product produced as in example 2, but the recipe consists of about 80-93 weight% durum semolina, 5-15 weight% corn starch, about 2 weight% oil and 0-3 weight% salt (in percentage of the total ingredients). Another starch than corn starch can be used.
Total water content as in example 2.

The product corresponds to the product of example 2, but with a density of as low as 70 g/l. The product can subsequently be seasoned as described in example 10.

### Example 4

Product produced as example 2 or 3, but the recipe consists of 77-78 weight% durum wheat, 10 weight% corn starch, 10 weight% sugar, 2 weight% oil and 0-1 weight% salt.
Total water content as in example 2. The product has a density of 130-170 g/l.
The product can subsequently be seasoned as described in example 10. The product is suitable as crunchy candy in chocolate bars and the like.
The product can subsequently be seasoned as described in example 10.

### Example 5

Product produced as in example 2 or 3, but added 7-9% water (in percentage of the total ingredients). Total water content of 16-23 weight% of the total mass. Immediately after the extruder the product is conveyed to a roller consisting of 2 oppositely rotating steel rollers. The distance between the rollers can be adjusted so that the product achieves the desired thickness. In the present embodiment a grain roller of the brand Agrima type 160 SM is used. The distance is adjusted so that the steel rollers just exactly touch each other. After the rolling the product is dried as described in example 2.
Thus, flat irregularly rounded chips-like products with a thickness of about 2 mm and a "diameter" of 20-30 mm is achieved.
The product can, subsequently, be seasoned as described in example 10.

### Example 6

Product produced as in example 5, but cut into larger pieces - approximately twice the size in relation to example 5. (Only 1 blade on the rotating knife). In the present embodiment a grain roller of the brand Agrima type 150 SH30 is used. The pieces are rolled in a roller with a pre-roller consisting of a single rotating steel wheel, which provides a light rolling for the purpose of easing the actual rolling between 2 rotating steel wheels corresponding to example 5.
The pre-rolling is necessary in order for the roller to be able to draw the larger pieces down between the rollers.
The product corresponds to that of example 5, but has a diameter of 35-50 mm.
The product can, subsequently, be seasoned as described in example 10.

### Example 7

Product produced as in example 4, but added 10 weight% liquid honey in stead of sugar. Because of the water content of the honey only 3-4 weight% water is added in the extruder. The total water content is 16-20 weight% of the total mass. The product corresponds to that of example 4, but has a darker color and a taste of honey.
The product can, subsequently, be seasoned as described in example 10.
The product can be used as a breakfast product or as candy in chocolate bars and the like.

### Example 8

Product produced as in example 2 or 3, but with a recipe consisting of 80 weight% durum wheat, 10 weight% corn starch and 10 weight% sour cream with 18% fat. Total water content is 16-20 weight% of the total mass. Depending on the possible subsequent dosage of spices, salt can be added if needed. Because of the composition of the sour cream neither oil nor water needs to be added.
The production is as in example 2 and the product has a recognizable taste of sour cream and a light and crispy texture. The density is 90-110 g/l.
The product is a tasty snack with less than 5 weight% fat, which, subsequently, can be seasoned as described in example 10.

### Example 9

Product produced as in example 1, 2 or 3, but added aroma or spice to the flour mixture.
In order to minimize the influence of the aroma on the texture, water and oil from the aroma must be counteracted in the recipe.
In the present embodiment the following aromas/spices have been used, either separately or together, added from 0.1-10 weight%: Cheese aroma in paste shape, cheese powder, jalapeno extract, oregano extract, onion extract, paprika powder, butter aroma, bacon aroma, pizza spice extract, sodium monoglutaminate and salt. Other aromas and flavor enhancers can be used. Premixed aroma can, for instance, be supplemented with a content of spices as described in example 10.

### Example 10

This example describes how spices can be applied onto the products from examples 1-9 with no, or a very limited, addition of fat. In this embodiment the dosage of spices takes place by spraying atomized oil, for instance heated coconut oil, on the outside of the products in a cylinder and subsequently conveying the products to a spice dosing unit, either by leading the products through an ultra sound pulverized cloud of spices or by conveying the products to another cylinder in which spices are added continuously. Industrial equipment for performing this in a continued process exists. With this process the products described in examples 1-9 can be manufactured into tasty, crisp, spicy snacks with 3-10 weight% fat.
Furthermore, the products from examples 1-9 will be suited for a process which doses spices entirely without the use of fat.

Processes are described in which starch or polymer solutions are used as adhesives for the spices. Through these processes the products described in examples 1-9 can be manufactured into tasty, crisp, spicy snacks with less than 5 weight% fat.

### Example 11

Product produced as in example 2, but where the flour mixture consists of 50% durum wheat flour and 50% regular wheat flour.
Subsequently, the product can be seasoned as described in example 10.
The embodiment is as in example 1 or 2, but flavor, color and texture is the most acceptable with a lower content of regular wheat flour.

### Example 12

Product produces as described in previous examples, but extruded through a triangular die opening and cut off in slices of 1 mm to 10 mm creating triangular shaped chips. The size of the triangular die opening determines the size and expansion of the resulting triangular product.

The examples have been illustrated in table 1.

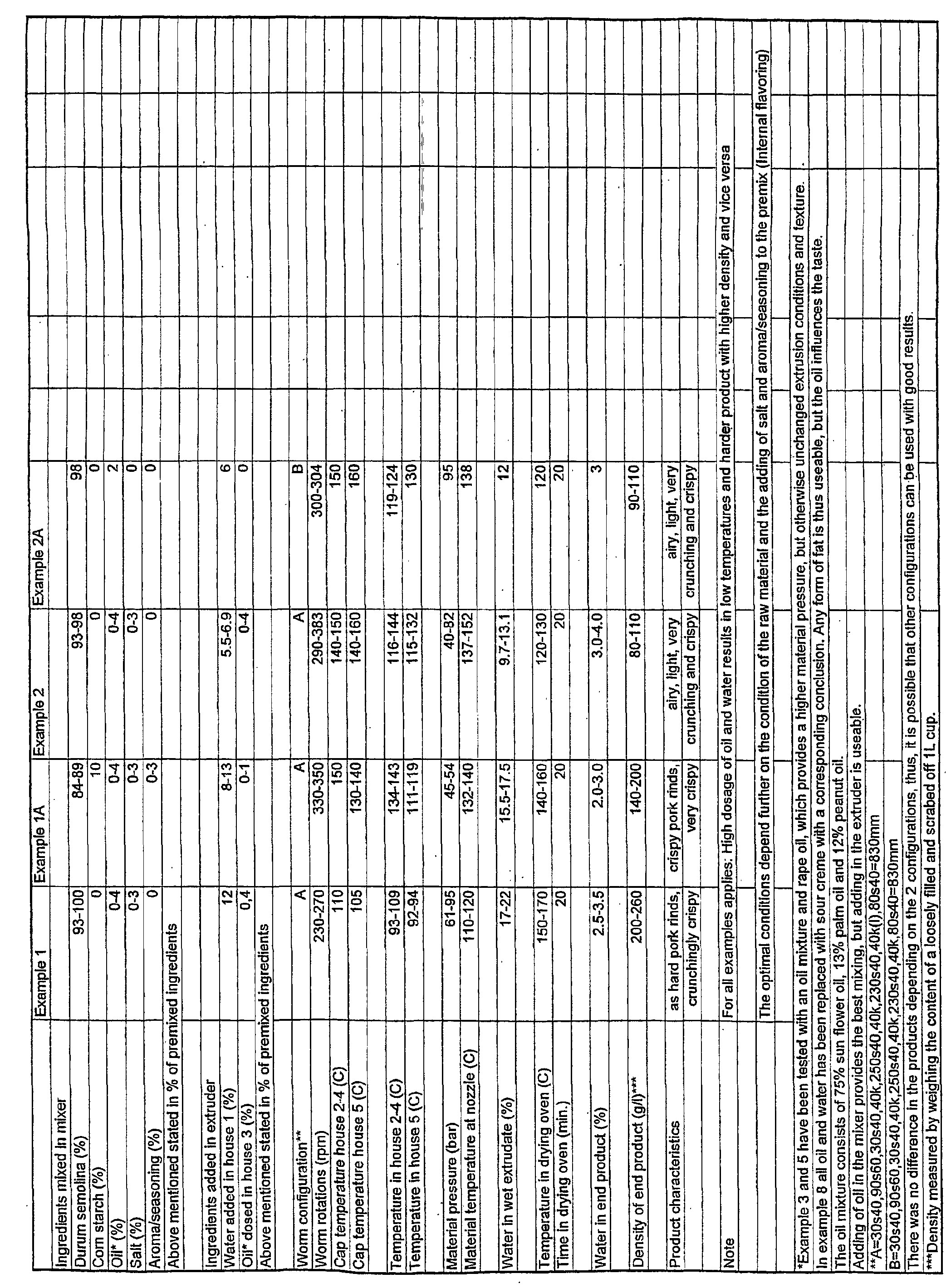

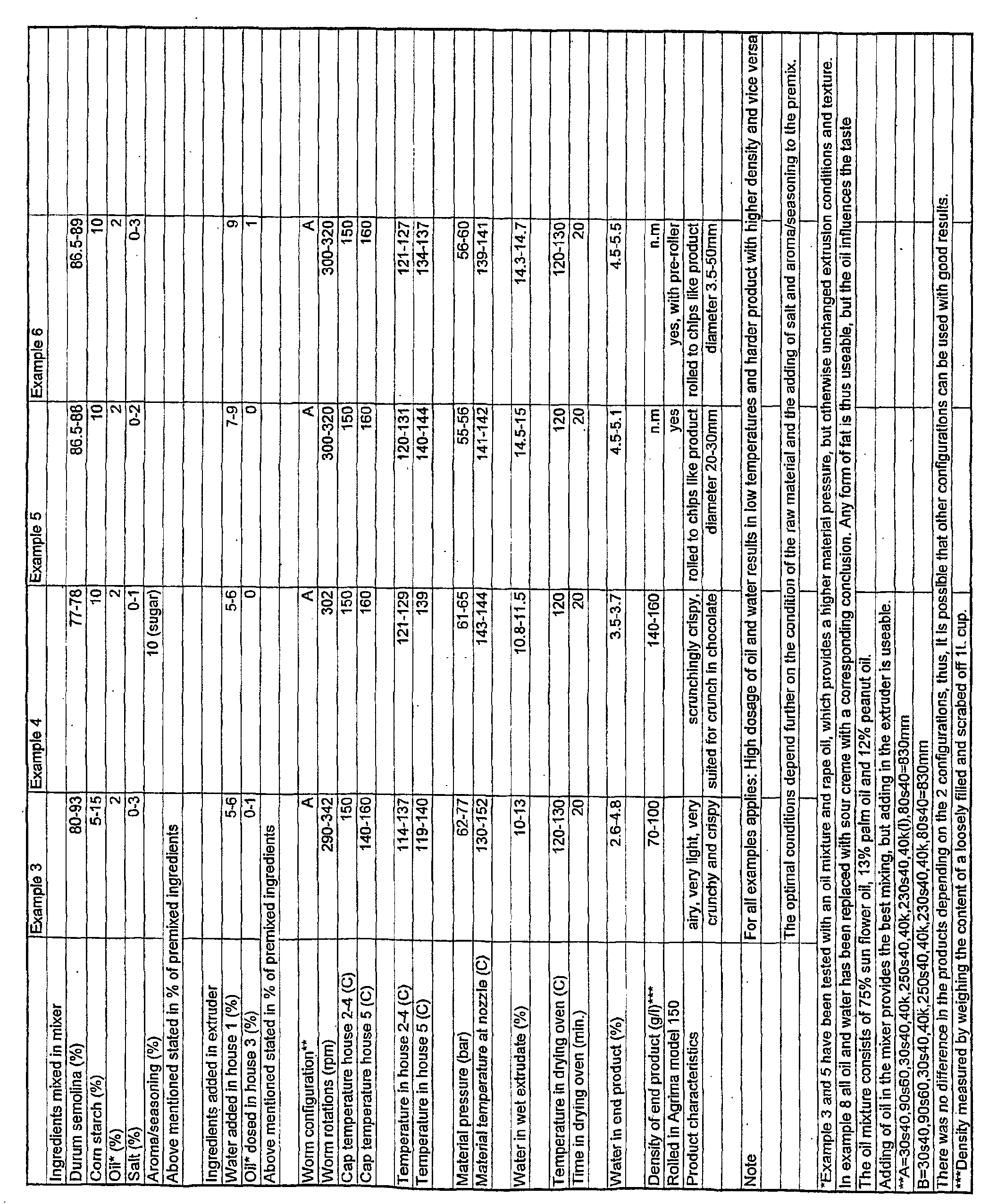

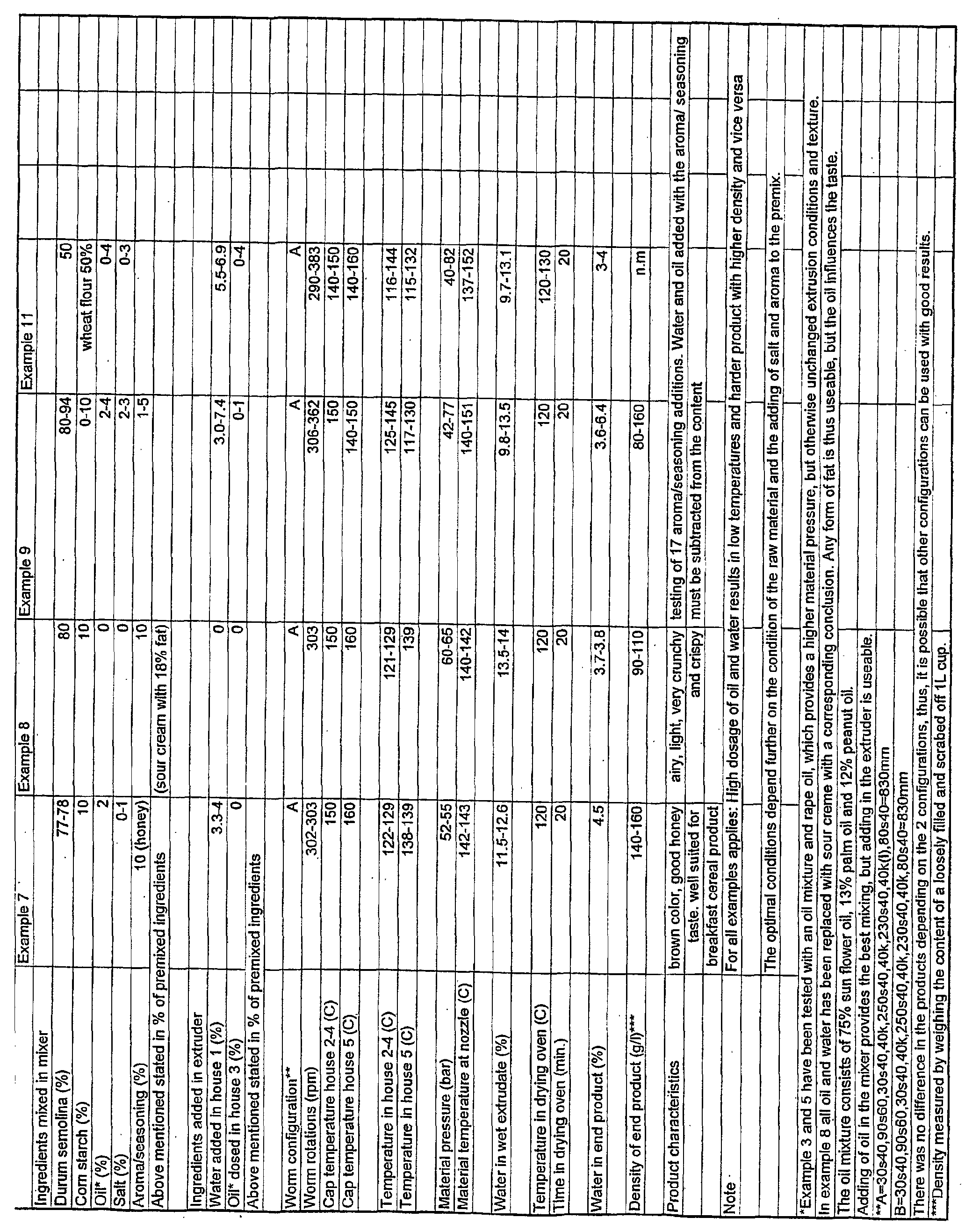

## Claims

1. Method for producing expanded snack and breakfast cereal products, primarily based on durum wheat **characterized in that**
- a basic mass is mixed in which durum wheat flour of all types constitutes 50-100 weight% of the flour mixture;
- the basic mass is extruded;
- during the extrusion process a pressure is built up in the basic mass;
- the basic mass is heated to a temperature between 100°C and 160°C, preferably between 110°C and 150°C;
- the desired size and shape of the product is conveyed to the basic mass during or immediately after exiting the extruder and
- the individual products are dried to a desired moisture level.

2. Method according to claim 1 **characterized in that**
durum wheat flour, durum semolina, durum granular and/or other products form Triticum Durum are chosen as primary ingredient, including products manufactured of sprouted durum wheat;
- the basic mass is mixed in a mixer, adding to the durum wheat flour:
- vegetable starch, for example corn starch, potato starch, rice starch, wheat starch, corn flour, rice flour, rye flour, potato flour, wheat flour, modified starch or other hydrocolloids so that this constitutes 0-50% of the flour mixture;
- 0-10 weight% vegetable oil and
- if desired additives, flavor and color additives, for example milk products, salt, mineral salt, herbal salt, smoke salt, sugar, honey, flavor enhancing additives, pH regulating means, vitamins, minerals, aroma;
- the basic mass, including optional additives, is conveyed to an extruder where between 0 and 5 weight% oil can be added directly in the extrusion tool;
- 0-20 weight% water of the total mass is added either in the mixer or in-line in the extruder;
- temperature and pressure of the basic mass are measured at the extruder die;
- the basic mass is given its final shape during or immediately after its exit from the extruder;
- the products are given their shape by cutting an extruded string into the desired pieces by using a shaping tool, for example a knife, matrix or roller;
- the products that have been cut off are dried directly after exiting the extruder or shaping tool, and
- the products are dried at a temperature of between 100°C and 200°C for between 10 and 20 minutes.

3. Method according to claim 1 or 2 **characterized in that** the durum wheat content, the water content, the oil content, the pressure and temperature and/or the number of revolutions of the extrusion screws are varied so that the pieces that have been cut off and dried have a density in the interval of 7 g/100 ml to 25 g/100 ml, corresponding to an expansion of approximately 2 to approximately 8 times.

4. Method according to claim 1, 2 or 3 **characterized in that** the flavor additives are added after the extrusion or after drying by coating the individual products with a surface coating of atomized vegetable oil or a starch or polymer solution and, subsequently, leading the products through an atomized fog of spice mixtures or, alternatively, conveying the surface coated products to a cylinder where spices are added continuously.

5. Method according to any of the claims 1-4 **characterized in that** the individual products are rolled to a thickness of between 1 and 10 mm before they are dried.

6. Method according to any of the proceeding claims **characterized in that** the basic mass at the extrusion die is brought to a temperature of between 110°C and 160°C, preferably between 125°C and 155°C and in particular between 125°C and 145°C.

7. Method according to any of the proceeding claims **characterized in that** the basic mass is mixed from:
- 80-93 weight% durum semolina unsprouted and/or sprouted,
- 5-15 weight% corn starch,
- 1-3 weight% vegetable oil,
- 0-3 weight% salt.

8. Method according to any of the preceding claims **characterized in that** all other ingredients besides flour ingredients, sprouted and/or unsprouted, are added in-line in the extruder.

9. Method according to any of the proceeding claims **characterized in that** a pressure is built up in the basic mass of between 25 bar and 110 bar, preferably between 40 bar and 95 bar and most preferred between 49 bar and 95 bar.

10. Expanded snack or breakfast cereal product produced according to a method according to any of the proceeding claims **characterized in that** the product has density of between 30 g/100 ml and 7 g/100 ml and a humidity level of less than 7 weight%, preferably less than 5 weight%.

11. Snack or breakfast cereal product according to claim 10 **characterized in that** it has a fat content in the interval of between 0 and 10 weight%.

## Patentansprüche

1. Verfahren zur Herstellung von expandierten Snack- und Frühstückscerealien-Produkten, die in erster Linie auf Durumweizen basieren, **dadurch gekennzeichnet, dass**
- eine Grundmasse gemischt wird, in der Durumweizenmehl aller Typen 50 bis 100 Gew.-% des Mehlgemisches bildet;
- die Grundmasse extrudiert wird;
- während des Verfahrens des Extrudierens ein Druck in der Grundmasse aufgebaut wird;
- die Grundmasse auf eine Temperatur zwischen 100°C und 160°C, vorzugsweise zwischen 110 und 150°C erwärmt wird;
- die Grundmasse während und unmittelbar nach dem Austreten aus dem Extruder in die gewünschte Größe und Form gebracht wird;
- die einzelnen Produkte zu einem gewünschten Feuchtigkeitslevel getrocknet werden.

2. Verfahren nach Anspruch 1, **dadurch gekennzeichnet, dass** Durumweizenmehl, Durumgries, Durumkörner und/oder andere Produkte, hergestellt aus Triticum Durum, als primäres Ingrediens gewählt werden, einschließlich Produkte, die aus gekeimtem Durumweizen hergestellt sind;
- die Grundmasse in einem Mischer gemischt wird, wobei zu dem Durumweizenmehl gegeben werden:
- Pflanzenstärke, z.B. Maisstärke, Kartoffelstärke, Reisstärke, Weizenstärke, Maismehl, Reismehl, Roggenmehl, Kartoffelmehl, Weizenmehl, modifizierte Stärke oder andere Hydrokolloide, so dass dies 0 bis 50 % des Mehlgemisches ausmacht;
- 0 bis 10 Gew.-% pflanzliches Öl und
- wenn gewünscht, Additive, Geschmacks- und Farbadditive, z.B. Milchprodukte, Salz, Mineralsalz, Kräutersalz, Räuchersalz, Zucker, Honig, geschmacksverstärkende Additive, pH-regulierende Mittel, Vitamine, Mineralstoffe, Aroma;
- die Grundmasse, einschließlich optionaler Additive, zu einem Extruder transportiert wird, wo zwischen 0 und 5 Gew.-% Öl direkt in das Extrusionswerkzeug gegeben werden können;
- 0 bis 20 Gew.-% Wasser der gesamten Masse entweder im Mischer oder in-Line im Extruder zugesetzt werden;
- Temperatur und Druck der Grundmasse an der Extruderdüse gemessen werden;
- die Grundmasse während oder unmittelbar nach ihrem Austreten aus dem Extruder ihre endgültige Gestalt bekommt;
- die Produkte ihre Gestalt erhalten, indem ein extrudierter Strang in die gewünschten Stücke geschnitten wird, wobei ein Formungswerkzeug, z.B. ein Messer, eine Matrix oder eine Walze verwendet werden;
- die Produkte, die abgeschnitten wurden, direkt nach Verlassen des Extruders oder des Formungswerkzeugs getrocknet werden; und
- die Produkte bei einer Temperatur zwischen 100 und 200°C für zwischen 10 und 20 Minuten getrocknet werden.

3. Verfahren nach Anspruch 1 oder 2, **dadurch gekennzeichnet, dass** der Durumweizengehalt, der Wassergehalt, der Ölgehalt, der Druck und die Temperatur und/oder die Anzahl der Umdrehungen der Extrudierschnecke so verändert werden, dass die Stücke, die abgeschnitten wurden und getrocknet wurden, eine Dichte im Intervall von 7 g/100 ml bis 25 g/100 ml haben, was einer Expansion des etwa 2- bis etwa 8-Fachen entspricht.

4. Verfahren nach Anspruch 1, 2 oder 3, **dadurch gekennzeichnet, dass** die Geschmacksadditive nach dem Extrudieren oder nach Trocknung zugesetzt werden, indem die einzelnen Produkte mit einer Oberflächenbeschichtung aus atomisiertem Gemüseöl oder einer Stärkeoder Polymerlösung beschichtet werden und anschließend die Produkte durch einen atomisierten Nebel aus Gewürzgemischen geführt werden oder alternativ die Oberflächen-beschichteten Produkte zu einem Zylinder befördert werden, in dem kontinuierlich Gewürze zugesetzt werden.

5. Verfahren nach einem der Ansprüche 1 bis 4, **dadurch gekennzeichnet, dass** die einzelnen Produkte zu einer Dicke zwischen 1 und 10 mm gewalzt werden, bevor sie getrocknet werden.

6. Verfahren nach einem der vorangehenden Ansprüche, **dadurch gekennzeichnet, dass** die Grundmasse an der Extrudierdüse auf eine Temperatur zwischen 110°C und 160°C, vorzugsweise zwischen 125°C und 155°C und insbesondere zwischen 125°C und 145°C gebracht wird.

7. Verfahren nach einem der vorangehenden Ansprüche, **dadurch gekennzeichnet, dass** die Grundmasse aus:
- 80 bis 93 Gew.-% Durumgries, ungekeimt und/oder gekeimt,
- 5 bis 15 Gew.-% Maisstärke,
- 1 bis 3 Gew.-% pflanzliches Öl,
- 0 bis 3 Gew.-% Salz
gemischt wird.

8. Verfahren nach einem der vorangehenden Ansprüche, **dadurch gekennzeichnet, dass** alle anderen Ingredienzien außer den Mehlingredienzien, gekeimt und/oder ungekeimt, in-Line in den Extruder gegeben werden.

9. Verfahren nach einem der vorangehenden Ansprüche, **dadurch gekennzeichnet, dass** in der Grundmasse ein Druck von zwischen 25 bar und 110 bar, vorzugsweise zwischen 40 bar und 95 bar, und am vorteilhaftesten zwischen 49 bar und 95 bar aufgebaut wird.

10. Expandiertes Snack- oder Frühstückscerealienprodukt, das nach einem Verfahren nach einem der vorangehenden Ansprüche produziert wurde, **dadurch gekennzeichnet, dass** das Produkt eine Dichte zwischen 30 g/100 ml und 7 g/100 ml und einen Feuchtigkeitslevel von weniger als 7 Gew.-%, vorzugsweise weniger als 5 Gew.-% hat.

11. Snack- oder Frühstückscerealenprodukt nach Anspruch 10, **dadurch gekennzeichnet, dass** es einen Fettgehalt im Intervall zwischen 0 und 10 Gew.-% hat.

## Revendications

1. Procédé de production de produits de céréales pour le petit déjeuner et d'en-cas gonflés, principalement à base de blé dur,
**caractérisé en ce que** :
- une masse de base est mélangée dans laquelle de la farine de blé dur de toutes sortes constitue 50-100% en poids du mélange de farine ;
- la masse de base est extrudée ;
- pendant le processus d'extrusion, une pression est créée dans la masse de base ;
- la masse de base est chauffée à une température entre 100°C et 160°C, de préférence entre 110°C et 150°C ;
- la forme et la dimension souhaitées du produit sont données à la masse de base pendant ou immédiatement après la sortie de l'extrudeuse ; et
- les produits individuels sont séchés à un taux d'humidité souhaité.

2. Procédé selon la revendication 1,
**caractérisé en ce que** :
- de la farine de blé dur, de la semoule de blé dur, des produits granulaires durs et/ou autres produits à partir de Triticum Durum sont choisis comme ingrédient principal, y compris des produits fabriqués à partir de blé dur germé ;
- la masse de base est mélangée dans un mélangeur, en ajoutant à la farine de blé dur :
. de l'amidon végétal, par exemple de l'amidon de maïs, de l'amidon de pomme de terre, de l'amidon de riz, de l'amidon de blé, de la farine de maïs, de la farine de riz, de la farine de seigle, de la farine de pomme de terre, de la farine de blé, de l'amidon modifié ou autres hydrocolloïdes, de sorte que cela constitue 0-50% du mélange de farine ;
. 0-10% en poids d'huile végétale ; et
. si on le souhaite, des additifs, des additifs de goût et des colorants, par exemple des produits laitiers, du sel, du sel minéral, du sel d'herbes aromatiques, du sel de fumage, du sucre, du miel, des additifs augmentant le goût, des moyens de régulation du pH, des vitamines, des minéraux, des arômes ;
- la masse de base, incluant des additifs éventuels, est acheminée vers une extrudeuse où entre 0 et 5% en poids d'huile peuvent être ajoutés directement dans la machine d'extrusion ;
- 0-20% en poids d'eau de la masse totale sont ajoutés soit dans le mélangeur ou en ligne dans l'extrudeuse ;
- la température et la pression de la masse de base sont mesurées au niveau de la filière de l'extrudeuse ;
- la masse de base est mise sous sa forme finale pendant ou immédiatement après sa sortie de l'extrudeuse ;
- les produits sont mis dans leur forme par découpe d'un cordon extrudé en morceaux souhaités en utilisant un outil de forme, par exemple un couteau, une matrice ou un rouleau ;
- les produits, qui ont été découpés, sont séchés directement après la sortie de l'extrudeuse ou de l'outil de mise en forme ; et
- les produits sont séchés à une température entre 100°C et 200°C pendant entre 10 et 20 minutes.

3. Procédé selon la revendication 1 ou 2,
**caractérisé en ce que** la teneur en blé dur, la teneur en eau, la teneur en huile, la pression et la température et/ou le nombre de tours des vis d'extrusion sont variables, de sorte que les morceaux qui ont été découpés et séchés, ont une masse volumique comprise dans l'intervalle entre 7 g / 100 ml et 25 g / 100 ml, correspondant à une expansion d'approximativement 2 à approximativement 8 fois.

4. Procédé selon la revendication 1, 2 ou 3,
**caractérisé en ce que** les additifs de goût sont ajoutés après l'extrusion ou après le séchage en enrobant les produits individuels d'un revêtement de surface d'huile végétale atomisée ou d'une solution polymère ou d'amidon et, par la suite, en amenant les produits à travers un brouillard atomisé de mélanges épicés ou, alternativement, en acheminant les produits enrobés en surface vers un cylindre où des épices sont ajoutés de façon continue.

5. Procédé selon une quelconque des revendications 1-4,
**caractérisé en ce que** les produits individuels sont roulés à une épaisseur entre 1 et 10 mm avant qu'ils soient séchés.

6. Procédé selon une quelconque des revendications précédentes,
**caractérisé en ce que** la masse de base au niveau de la filière d'extrusion est amenée à une température entre 110°C et 160°C, de préférence entre 125°C et 155°C et, en particulier, entre 125°C et 145°C.

7. Procédé selon une quelconque des revendications précédentes,
**caractérisé en ce que** la masse de base est mélangée à partir de :
- 80-93% en poids de semoule de blé dur non germé et/ou germé,
- 5-15% en poids d'amidon de maïs,
- 1-3% en poids d'huile végétale,
- 0-3% en poids de sel.

8. Procédé selon une quelconque des revendications précédentes,
**caractérisé en ce que** tous les autres ingrédients, outre les ingrédients de farine, germés et/ou non germés, sont ajoutés en ligne dans l'extrudeuse.

9. Procédé selon une quelconque des revendications précédentes,
**caractérisé en ce qu'**une pression est fournie dans la masse de base entre 25 bars et 110 bars, de préférence entre 40 bars et 95 bars et plus préférentiellement entre 49 bars et 95 bars.

10. Produit de céréale pour le petit déjeuner ou d'en-cas gonflé, réalisé selon un procédé selon une quelconque des revendications précédentes,
**caractérisé en ce que** le produit a une masse volumique entre 30 g / 100 ml et 7 g / 100 ml et un taux d'humidité inférieur à 7% en poids, de préférence inférieur à 5 % en poids.

11. Produit de céréale pour le petit déjeuner ou d'en-cas selon la revendication 10,
**caractérisé en ce qu'**il a une teneur en graisse comprise dans l'intervalle entre 0 et 10% en poids.
